(19) Europäisches Patentamt
European Patent Office
Office européen des brevets

(11) **EP 2 232 252 B1**

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(21) Anmeldenummer: **09702391.5**

(22) Anmeldetag: **12.01.2009**

(51) Int Cl.:
**G01N 27/62** *(2006.01)*   **G01N 27/64** *(2006.01)*
**H01J 49/00** *(2006.01)*

(86) Internationale Anmeldenummer:
**PCT/DE2009/000023**

(87) Internationale Veröffentlichungsnummer:
**WO 2009/089818 (23.07.2009 Gazette 2009/30)**

(54) **VERFAHREN UND VORRICHTUNG ZUR DETEKTION UND IDENTIFIZIERUNG VON GASEN**

METHOD AND DEVICE FOR DETECTION AND IDENTIFICATION OF GASES

PROCÉDÉ ET DISPOSITIF POUR LA DÉTECTION ET L'IDENTIFICATION DE GAZ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **19.01.2008 DE 102008005281**

(43) Veröffentlichungstag der Anmeldung:
**29.09.2010 Patentblatt 2010/39**

(73) Patentinhaber: **AIRSENSE Analytics GmbH**
**19061 Schwerin (DE)**

(72) Erfinder:
• **MÜNCHMEYER, Wolf**
  **38468 Ehra-Lessien (DE)**
• **UNGETHÜM, Bert**
  **19059 Schwerin (DE)**
• **WALTE, Andreas**
  **19059 Schwerin (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
WO-A-2006/114580  WO-A-2007/080376
US-A- 4 150 319  US-A- 4 445 038
US-A- 6 107 624  US-A1- 2006 097 156
US-B1- 6 495 823

## Beschreibung

Die Erfindung bezieht sich auf ein Verfahren zur Identifizierung von Gasen nach dem Oberbegriff des Anspruchs 1 sowie eine dazugehörige Vorrichtung nach dem Oberbegriff des Anspruchs 10. Derartige Verfahren und die dazugehörigen Vorrichtungen zur Detektion und Identifizierung von Gasen werden zur Erkennung und zum Nachweis von chemischen Stoffen oder Verbindungen, insbesondere von explosiven und/ oder gesundheitsschädigenden, in sehr geringen Konzentrationen nachzuweisenden Stoffen oder Stoffverbindungen eingesetzt.

Der Nachweis explosiver und/ oder toxischer chemischer Verbindungen erfordert Messverfahren mit Nachweisgrenzen im ppt-ppb-Bereich. Zur Erkennung und zum Nachweis dieser chemischen Verbindungen werden deshalb häufig Spektrometer eingesetzt. Dabei ist die Verwendung von Ionenmobilitätsspektrometern (IMS), die auch als Plasma-Chromatographen bezeichnet werden, zu bevorzugen, weil sie im Gegensatz zu anderen Spektrometern, wie z.B. einem Massenspektrometer, keine Vakuumpumpe zur Erzeugung eines Vakuums für die Detektion der chemischen Stoffen oder Verbindungen benötigen. Deshalb sind IMS gegenüber anderen Spektrometern in ihrer Bauausführung klein und kostengünstig.

Der Anwendungsbereich der IMS ist sehr groß. Er reicht vom medizinischen Bereich, z.B. bei der Untersuchung der Ausatemluft von Patienten, über den Einsatz zur Produktionsüberwachung, z.B. bei der Qualitätskontrolle in einer Kaffeerösterei bis zum militärischen Bereich, z.B. beim Nachweis von Kampfstoffen. Eine allgemeine Übersicht über IMS und deren Anwendungen finden sich beispielsweise in: G.A. Eiceman und Z. Karpas "Ion Mobility Spectrometry" (2nd. Edition, CRC, Boca Raton, 2005).

Der Aufbau und die Funktionsweise des IMS sind in einer Vielzahl von Veröffentlichungen beschrieben.

So wird beispielsweise in der US 3621240 ein klassisches Flugzeit-IMS vorgestellt, bei dem die unterschiedliche Beweglichkeit von Ionen bei Atmosphärendruck ausgenutzt wird. Dazu werden kontinuierlich in einer Ionenquelle entweder mittels radioaktiver Strahlung, Photoionisierung oder Koronaentladungen die Zielverbindungen ionisiert. Sehr häufig werden radioaktive Quellen verwendet, die direkt Luftmoleküle ionisieren. Diese ionisierten Luftmoleküle reagieren weiter und bilden zusammen mit Wassermolekülen sogenannte Reaktant-Ionen. Diese Reaktant-Ionen reagieren mittels Protonentransfer-, Elektronentransfer- oder Protonenabstraktions-Reaktionen mit den interessierenden Verbindungen und bilden die sog. Produkt-Ionen. Diese Produkt-Ionen werden in einer sehr kurzen Zeitspanne von ca. 200 Mikrosekunden mit Hilfe eines elektrischen Gitters in eine Driftröhre eingelassen, welche ein elektrisches Feld aufweist und die Ionen in einem Driftgas, üblicherweise gefilterte Luft bei Umgebungsdruck, beschleunigt. Durch die Änderung der Polarität des elektrischen Feldes der Driftstrecke können in einem positiven Betriebsmodus positive Ionen und in einem negativen Betriebsmodus negative Ionen nachgewiesen werden. Durch das elektrische Feld werden die eingelassenen Produkt-Ionen ständig beschleunigt und durch Stöße mit den neutralen Molekülen im Driftgas ständig abgebremst. Durch das elektrische Feld wirkt auf alle Ionen mit gleicher Ladung die gleiche Zugkraft. Da aber die Produkt-Ionen verschiedene Durchmesser und Formen aufweisen, weisen die Produkt-Ionen unterschiedliche Driftgeschwindigkeiten auf. Am Ende der Driftröhre treffen die Produkt-Ionen mit diesen unterschiedlichen Driftgeschwindigkeiten auf einen Detektor auf. Aus den unterschiedlichen Flugzeiten der Produkt-Ionen durch die Driftröhre, die typischerweise im Bereich von 5 bis 30 Millisekunden liegen, lassen sich Rückschlüsse auf die untersuchten chemischen Verbindungen ziehen.

Als Startpuls für die Messung der Driftgeschwindigkeit im klassischen Flugzeit-IMS dient der Schaltprozess des elektrischen Gitters, welcher nur einen Teil der Ionen in den Driftraum lässt. Durch die Stöße mit den Molekülen der Umgebungsluft kommt es zu einer diffusiven Verbreiterung der eingelassenen Ionen. Das am Detektor gemessene Signal ist dementsprechend in Form einer gaußförmigen Glockenkurve. Aus der gemessenen Flugzeit oder Driftzeit im Maximum der Glockenkurve und der bekannten Länge der Driftstrecke kann die Driftgeschwindigkeit bestimmt werden, wobei ein resultierendes Spektrum zur Identifizierung der chemischen Stoffe oder Verbindungen genutzt werden kann.

Die Flugzeit der Produkt-Ionen durch die Driftröhre ist proportional der Driftgeschwindigkeit, mit der die Produkt-Ionen auf den Detektor treffen. Die Driftgeschwindigkeit, als Ergebnis der Beschleunigung im elektrischen Feld und der Abbremsung durch Stö-ße der Ionen mit den neutralen Molekülen im Driftgas ist wiederum abhängig von der Ionenmasse bzw. Ionengröße und der Ionenform.

Die Driftgeschwindigkeit der Produkt-Ionen $v_d$ ist bei geringer Feldstärke $E$, z.B.

E = 200 V/cm, linear abhängig von der Feldstärke. Bei diesen geringen Feldstärken ist dann die Beweglichkeit oder Mobilität $K$ der Produkt-Ionen unabhängig von der Feldstärke und lässt sich wie folgt ausdrücken:

$$K = v_d / E \, .$$

Da die Driftgeschwindigkeit der Ionen auch von der Temperatur und dem Druck in der Driftröhre abhängig ist, werden zur Erkennung und zum Nachweis der chemischen Verbindungen die Beweglichkeiten oder Mobilitäten der Produkt-Ionen immer auf Normalbedingungen, also auf eine Normaltemperatur $T_0$ = 273°K und einem Normaldruck $p_0$

= 1013hPa bezogen. Die reduzierte oder normalisierte Beweglichkeiten oder Mobilitäten der Produkt-Ionen lässt sich dann wie folgt darstellen:

$$K_0 = K \cdot (T_0 / T) \cdot (p / p_0) = K \cdot (273°K/T) \cdot (p / 1013hPa).$$

Von Nachteil bei der Verwendung des klassischen Flugzeit-IMS ist aber, dass nur ein geringer Teil der Produkt-Ionen für die Detektion und damit zur Auswertung der untersuchten chemischen Verbindungen genutzt wird. Da der Startpuls des elektrischen Gitters verglichen mit der Driftzeit der Ionen sehr kurz ist, gelangt nur ein geringer Teil der Produkt-Ionen durch das Gitter in die Driftröhre. Der größere Teil der Produkt-Ionen trifft auf das Gitter, wenn es geschlossen ist und wird am Gitter neutralisiert.

Deshalb sind durch Erhöhung des Ionendurchlasses in Kombination mit einer Modulation des Ionenstrahls mit Sperrgittern eine Optimierung der Ausbeute der in die Driftröhre gelangenden Produkt-Ionen und somit auch die Erhöhung der Nachweisgrenze der untersuchten chemischen Stoffe oder Verbindungen möglich. So wird beispielsweise in der DE 19515270 C2 eine derartige Modulation des Ionenstromes vorgeschlagen, so dass mit Hilfe einer mathematischen Entfaltung, z.B. über Hadamard- oder Fourier-Transformationen, das Laufzeitspektrum des IMS berechnet werden kann.

Von Nachteil der bisher vorgestellten IMS ist aber, dass entweder nur positive oder negative Ionen gemessen werden können und deshalb die Polarität der Trennröhre gewechselt werden muss, was die Messdauer erhöht. Zudem sind einige toxische Industriechemikalien, wie z.B. Benzol, nicht mit einer radioaktiven Quelle messbar, da die Produkt-Ionen gleichzeitig mit den Reaktant-Ionen auf den Detektor auftreffen.

Deshalb ist z.B. aus der US 5420424, US 6495823 oder US 6504149 ein Differential Mobility Spectrometer (DMS) oder Field Asymetric Ion Mobility Spectrometer (FAIMS-Spektrometer) bekannt, dass aus einer Ionenquelle, Elektroden und Detektor besteht und bei dem nach der Bildung der Ionen diese gemeinsam mit den neutralen Molekülen mittels eines konstanten Gasflusses durch zwei parallele Elektroden geführt werden. Die Elektroden können entweder planparallel oder axialsymmetrisch aufgebaut sein. An den Elektroden liegt eine abwechselnd hohe und geringe elektrische Spannung an. Das elektrische Feld wirkt also im Gegensatz zum klassischen Flugzeit-IMS senkrecht zur Flussrichtung der Ionen. Die asymmetrische Wechselspannung wird so gewählt, dass die mittlere Spannung sich aufhebt. Eine Beschreibung dieser Wechselspannung zum Trennen von Ionen anhand der unterschiedlichen Änderungen der Ionenbeweglichkeiten durch den Einfluss hoher Feldstärken, findet sich z.B. in der SU 966583. Nach E.A. Mason und E.W. McDaniel in "Transport Properties of Ions in Gases" (Wiley, New York, 1988) ist bei sehr hohen Feldstärken, z.B. $E > 5000$ V/cm, die Mobilität nicht mehr unabhängig von der Feldstärke.

Im Gegensatz zum klassischen Flugzeit-IMS werden beim DMS die Ionen durch die Ausnutzung unterschiedlicher Änderungen der Beweglichkeiten der Ionen bei geringen und hohen elektrischen Feldstärken getrennt. Die Trennung der Ionen erfolgt dann aus der Differenz der Beweglichkeiten $K(E_{klein})$ und $K(E_{gross})$ der Ionen. Diese Differenz der Beweglichkeiten $K(E_{klein})$ und $K(E_{gross})$ der Ionen ist für verschiedene chemische Verbindungen unterschiedlich, so dass beim DMS das stoffabhängige Verhalten der Beweglichkeiten oder Mobilitäten der Ionen als Funktion der elektrischen Feldstärke verwendet wird.

Die Driftgeschwindigkeit der Ionen lässt sich bei großen Feldstärken folgendermaßen ausdrücken:

$$v_d = K(E) * E .$$

Die nicht konstante Beweglichkeit oder Mobilität K(E) lässt sich durch eine Reihenentwicklung mit Polynomkoeffizienten:

$$K(E) = K + k_1 * E^2 + k_2 * E^4 + \ldots\ldots.$$

oder mit einer Funktion $\alpha(E)$:

$$K(E) = K * ( 1 + \alpha(E) )$$

darstellen. Dabei beschreibt die Funktion $\alpha(E)$ die nichtlineare Abhängigkeit vom elektrischen Feld, die für chemische Verbindungen unterschiedlich ist. So kann die Funktion $\alpha(E)$ mit steigender Feldstärke stetig zunehmen, mit steigender Feldstärke abnehmen oder auch mit steigender Feldstärke zuerst zunehmen und bei höherer Feldstärke wieder abnehmen. Dementsprechend können chemische Verbindungen, je nach ihrer Abhängigkeit von der Feldstärke, in drei Kategorien eingeordnet werden. Bei den Ionen des Typs A nimmt die Beweglichkeit von Ionen mit Erhöhung der Feldstärke zu, bei Ionen des Typs C nimmt die Beweglichkeit mit der Erhöhung der Feldstärke ab und bei Ionen des Typs B nimmt die Beweglichkeit mit steigender Feldstärke zuerst zu und bei höheren Feldstärken wieder ab.

Die Abnahme der Beweglichkeit der Ionen mit steigender Feldstärke, d.h. bei Typ C erfolgt wegen der Abhängigkeit der Beweglichkeit von der Temperatur, da bei höheren Temperaturen die Stossfrequenz zunimmt. Die Zunahme der Beweglichkeit mit der Feldstärke, d.h. bei Typ A, begründet sich durch die Abnahme der Ionengröße bei hohen Feldstärken. Ein zu messendes Molekülion $M^+$ ist bei Umgebungsdruck immer mit Wassermolekülen umgeben, so dass es als Wassercluster $MH^+(H2O)_n$ vorliegt, wobei typischer zwei bis drei Wassermoleküle um das Molekül angelagert sind. Die Wassermoleküle sind aber nur schwach an das Molekülion gebunden, so dass bei sehr hohen Feldstärken bei einigen chemischen Verbindungen durch die höheren Driftgeschwindigkeiten Wassermoleküle abspaltet werden können und somit die Form und Masse verringert wird, so dass diese Produktionen sich schneller durch das Driftgas bewegen können. Die Wassermoleküle aus dem Driftgas werden bei geringeren Feldstärken wieder durch Stoßprozesse angelagert.

Bei der asymmetrischen Wechselspannung wirkt die geringe Spannung einer Polarität wesentlich länger auf die Ionen als die hohe Spannung der anderen Polarität. Ionen ohne Abhängigkeiten der Mobilität von der Feldstärke werden somit nicht abgelenkt und gelangen direkt zum Detektor. Da aber bei den meisten Verbindungen eine Abhängigkeit von der Feldstärke vorhanden ist, werden die oszillierenden Ionen im Mittel eine ablenkende Bewegung durchführen, so dass z.B. die Ionen des Typs A in Richtung der hohen Feldstärken abgelenkt werden. Um diese Ionen am Detektor nachweisen zu können, wird eine Gleichspannung oder Ablenkspannung auf die Elektroden mit der Wechselspannung überlagert, so dass die Ionen zum Detektor gelangen können. Durch eine gleichmäßige Veränderung dieser Gleichspannung, auch Kompensationsspannung genannt, werden dann nur bestimmte Ionen mit einem entsprechenden $\alpha$**(E)**-Wert durchgelassen. Wenn diese Kompensationsspannung in Form von einer Sägezahnspannung angelegt wird, wird ein Spektrum erzeugt, bei dem in der x-Achse nicht die Driftzeit, sondern die Kompensationsspannung aufgetragen wird.

Eine Trennung anhand der absoluten Mobilität erfolgt im Gegensatz zum klassischen Flugzeit-IMS nicht, da Verbindungen mit unterschiedlichen Mobilitäten aber ohne Abt hängigkeiten von der Feldstärke, d.h. $K(E_{klein}) = K(E_{gross})$, im asymmetrischen Wechselfeld nicht getrennt werden weil im Mittel die Ablenkung aufgehoben wird.

Da die Ionen im DMS nur durch den Gasfluss transportiert werden, gelangen positive und negative Ionen gleichzeitig durch das Trennfeld. Wenn am Ende zwei Detektoren mit unterschiedlicher Polarität aufgebaut werden, können mit diesen IMS positive und negative Ionen gleichzeitig erfasst werden.

Bei einem planparallelen Aufbau der Elektroden beträgt der Abstand zwischen den Elektroden z.B. nur 0,5 mm, sodass typischerweise bei einer nahezu rechteckförmigen Wechselspannung mit einer Frequenz von 1 MHz Feldstärken von ca. $E_{gross}$ = 20 kV/cm und $E_{klein}$ = 1 kV/cm angewendet werden. Die Kompensationsspannung wird in diesem Aufbau von - 15 V auf + 10 V innerhalb von einigen Sekunden erhöht.

Wenn neben der Kompensationsspannung auch die Feldstärke variiert wird, d.h. auch der $E_{gross}$ -Wert verändert wird, kann die Trennung der Ionen zusätzlich optimiert werden, wobei die Ergebnisse in einem so genannten Dispersions-Plot zusammenfassbar sind, bei denen die Kompensationsspannung als Funktion der hohen Feldstärke aufgetragen und die Intensität des Detektorsignals farbig dargestellt wird.

Von Nachteil bei der Verwendung des DMS ist aber, dass bei der Erfassung unbekannter Chemikalien die Messdauer zu hoch ist, da eine zeitaufwendigen Änderungen der Kompensationsspannungen und der Wechselspannungsamplituden zur Erstellung des Dispersions-Plot notwendig sind. Außerdem ist beim DMS die Auflösung und somit die Trennung von größeren Ionen, wie z.B. bei Phosphororganischen Verbindungen, wie beispielsweise in WO 2005/106450 gezeigt, schlechter als mit dem klassischen Flugzeit-IMS.

Deshalb wird in der WO 2005/067582 die Kopplung von mindestens einem DMS mit einem klassischen Flugzeit-IMS vorgeschlagen. So werden in einem Ausführungsbeispiel hinter einer Ionenquelle parallel ein DMS und ein klassisches Flugzeit-IMS angeordnet, wobei beide Spektrometer unabhängig voneinander arbeiten.

In einem weiteren Ausführungsbeispiel wird hinter einem DMS-System ein klassisches Flugzeit-IMS oder alternativ zwei zueinander parallele klassische Flugzeit-IMS angeordnet, wobei bei der letztern Ausführung gleichzeitig positive und negative Ionen erfasst werden, welche vorher aus dem DMS System geführt werden.

Von Nachteil ist aber, dass diese Kombinationen aus DMS und klassischen Flugzeit-IMS technisch sehr aufwendig sind, da insbesondere im letzteren Ausführungsbeispiel zwei klassische Flugzeit-IMS-Driftröhren und einem DMS aufgebaut und kombiniert werden müssen. Außerdem ist bei diesen Kombinationen aus DMS und klassischen Flugzeit-IMS die Messdauer zu hoch und eine sofortige Detektion der untersuchten chemischen Verbindungen nicht möglich, da das DMS als erstes Trennsystem wenigstens die Kompensationsspannungen durchfahren muss und somit einige Sekunden bis Minuten benötigt.

Der Erfindung liegt daher die Aufgabe zu Grunde, ein gattungsgemäßes Verfahren zur Identifizierung von Gasen sowie eine dazugehörige Vorrichtung zu entwickeln, dass einen einfachen Aufbau besitzt sowie eine sofortige und zeitgleiche Detektion der zu untersuchenden chemischen Verbindungen zulässt und dabei zur Identifizierung die stoffspezifische Mobilität und gleichzeitig die Änderung dieser Mobilität als Funktion der elektrischen Feldstärke ausnutzt.

Diese Aufgabe wird verfahrensseitig durch die kennzeichnenden Merkmale des Anspruchs 1 und vorrichtungsseitig durch die kennzeichnenden Merkmale des Anspruchs 10 gelöst. Zweckdienliche Ausgestaltungen ergeben sich aus den Unteransprüchen 2 bis 9 und 11 bis 19. Das neue Verfahren zur Identifizierung von Gasen sowie eine dazugehörige Vorrichtung beseitigen die genannten Nachteile des Standes der Technik.

Vorteilhaft bei der Anwendung des neuen Verfahrens zur Identifizierung von Gasen ist es, dass jedes ionisierte Molekül durch das resultierende elektrische Feld eine Driftgeschwindigkeit aufweist, die teilweise vergrößert oder verkleinert wird, wobei das resultierende elektrische Feld ein Gleichspannungsfeld ist, welches von einem asymmetrischen Wechselfeld überlagert wird. Dabei resultiert die Änderung der Driftgeschwindigkeit, also die teilweise vergrößerte oder verkleinerte Driftgeschwindigkeit daraus, dass jedes ionisierte Molekül durch das resultierende elektrische Feld eine konstante, mit einer oszillierenden Bewegung überlagerte Driftbewegung ausführt. Ob die Driftgeschwindigkeit eines ionisierten Moleküls sich teilweise vergrößert oder verkleinert, ist ionenspezifisch und hängt von den stofflichen Eigenschaften des Moleküls ab. Diese teilweise vergrößerten oder verkleinerten Driftgeschwindigkeiten der ionisierten Moleküle dienen zur Charakterisierung und Unterscheidung dieser ionisierten Moleküle. Dazu werden aus diesen Driftbewegungen die Driftzeiten der ionisierten Moleküle durch einen Driftraum gemessen und ausgewertet.

Von Vorteil ist dann, wenn jedes ionisierte Molekül mehrmals beschleunigt und abgebremst wird, wobei im Mittel, je nach den stofflichen Eigenschaften des Moleküls, die Beschleunigung größer oder kleiner als die Abbremsung ist. Dabei können als ionisierte Moleküle positive und/ oder negative Ionen, entweder zu unterschiedlichen Betriebsmodi der zum Driftraum gehörenden Driftröhre oder durch zwei mit entgegengesetzter Polarität betriebenen Driftröhren verwendet werden. Zur Messung der Driftzeiten werden die ionisierten Moleküle durch ein resultierendes elektrisches Feld zuerst auf eine konstante Driftgeschwindigkeiten befördert. Anschließend werden diese Moleküle teilweise zusätzlich beschleunigt und abgebremst oder mehrmals zusätzlich beschleunigt und abgebremst, wobei im Mittel die Flugzeit der Ionen größer oder kleiner als die Flugzeit ohne Wechselfeld ist. Das resultierende elektrische Feld ist ein Gleichspannungsfeld, welches von einem asymmetrischen Wechselspannungsfeld überlagert wird. Durch das asymmetrische Wechselfeld werden die Driftbewegungen, im Gegensatz zum klassischen Flugzeit-IMS, mit einer weiteren oszillierenden Bewegung überlagert, so dass Ionen, die im klassischen Flugzeit-IMS wegen ihrer gleichen Mobilitäten nicht getrennt werden können, getrennt werden, weil sie unterschiedliche Mobilitäten bei höheren Feldstärken aufweisen.

Von besonderem Vorteil ist dann, wenn das resultierende elektrische Feld ein Gleichspannungsfeld ist, welches lokal von einem Wechselspannungsfeld parallel überlagert wird, so dass die ionisierten Moleküle eine Driftbewegung in einer Richtung ausführen und die oszillierende Bewegung sich parallel hierzu überlagert.

Vorteilhaft ist auch, wenn das Gleichspannungsfeld eine geringe elektrische Feldstärke und das asymmetrische Wechselspannungsfeld eine hohe elektrische Feldstärke aufweist. Durch die asymmetrische Wechselspannung, bei der kurzfristig sehr hohe Feldstärken wirken, wird sichergestellt, dass eine zusätzliche Beschleunigung oder Abbremsung der Ionen, welche unterschiedlichen $\alpha(E)$ Abhängigkeiten aufweisen, stattfindet. Vorteilhaft ist es dann, wenn die Amplitude der asymmetrischen Wechselspannung kontinuierlich verändert wird und die daraus resultierende Änderung der Driftzeiten als zusätzliches Merkmal zur Identifizierung des untersuchten chemischen Stoffes oder Verbindung eingesetzt wird.

Von Vorteil ist es, wenn zur Auswertung der gemessenen Driftzeiten und zur Identifizierung der chemischen Verbindungen diese gemessenen Driftzeiten mit vorher ermittelten Driftzeiten bekannter chemischer Verbindungen verglichen werden und/ oder dieser Vergleich zwischen gemessenen Driftzeiten und den bekannter Driftzeiten von chemischer Stoffe und Verbindungen mittels mathematischer bzw. statistischer Methoden, zum Beispiel mittels regelbasierender Algorithmen oder auch Künstlichneuronalen Netzen erfolgt.

Auch ist es von Vorteil, wenn die Driftzeiten der ionisierten Moleküle von den Änderungen der Mobilitäten in Abhängigkeiten der Feldstärke dieser Ionen abhängen, weil diese Ionen in einem durch die Wechselspannungselektroden erzeugten elektrischen Feld mit einer hohen elektrischen Feldstärke eine andere Flugbahn durch den Driftraum aufweisen, als bei einem elektrischen Feld mit einer geringen elektrischen Feldstärke. Auch ist es von Vorteil, wenn die Driftzeiten ionisierter Moleküle mit gleichen Mobilitäten bei geringen elektrischen Feldstärken mit den Driftzeiten dieser ionisierten Moleküle nach Zuschaltung der durch die Wechselspannungselektroden erzeugten asymmetrischen Wechselspannungsfeld mit einer hohen elektrischen Feldstärke verglichen werden und dass zur Identifizierung der chemischen Verbindungen diese gemessenen Driftzeiten mit den vorher ermittelten Driftzeiten verglichen werden

Vorteilhaft bei der Anwendung der neuen Vorrichtung zur Identifizierung von Gasen ist es, dass mindestens eine Driftröhre einerseits durch ein Einlasssystem und andererseits durch jeweils einen Detektor begrenzt ist und sich in jeder Driftröhre ein die Driftröhre in einem Reaktionsraum und einem Driftraum unterteilendes Öffnungs- und Schließgitter befindet, wobei im Reaktionsraum eine Ionenquelle und im Driftraum ein Abschirmgitter angeordnet sind sowie die Driftröhre mehrere angeordnete Gleichspannungselektroden und um den Driftraum Wechselspannungselektroden aufweist.

Dann ist es von Vorteil, wenn eine weitere Driftröhre einerseits durch das Einlasssystem und andererseits durch einen weiteren Detektor begrenzt ist, wobei die Polaritäten der Driftröhren entgegengesetzt sind. Dadurch können dann gleichzeitig positive und negative Ionen, jeweils in einer Driftröhre, gemessen werden.

Vorteilhaft ist es auch, wenn die Driftröhre aus abwechselnd angeordneten Metallringen und Isolatorringen besteht, wobei jeder Metallring um den Driftraum jeweils eine Gleichspannungselektrode ausbildet, oder die Driftröhre aus einem oder mehreren Rohren mit geringer elektrischer Leitfähigkeit besteht.

Von Vorteil ist es, wenn die Driftröhre um den Driftraum mehrere, aus dünnen Drahtgittern bestehende Wechselspannungselektroden aufweist, die über die Länge des Driftraums verteilt angeordnet sind und dabei quer durch den Driftraum verlaufen. Alternativ ist es dann von Vorteil, wenn die Driftröhre mindestens eine im Driftraum angeordnete Hilfselektrode aufweist, weil mit dieser Hilfselektrode eine zusätzliche Kompensationsspannung erzeugt wird, die die Driftgeschwindigkeiten der ionisierten Moleküle unterschiedlich beeinflusst.

Von besonderem Vorteil ist es dann, wenn eine weitere Driftröhre einerseits durch das Einlasssystem und andererseits durch einen weiteren Detektor begrenzt ist, wobei Polaritäten der Driftröhren entgegengesetzt sind. Dadurch können dann gleichzeitig positive und negative Ionen, jeweils in einer Driftröhre, gemessen werden.

Das neue Verfahren zur Identifizierung von Gasen sowie die dazugehörige Vorrichtung kann auf verschiedene Weise realisiert werden. Diese sollen nun an einem Ausführungsbeispiel erläutert werden. Dazu zeigen:

Fig. 1: Schematische Darstellung einer Driftröhre,
Fig. 2: Beispielhafte Potentialverteilung im Längsschnitt der Driftröhre,
Fig. 3: Beispielhafter Potentialverlauf in der Driftröhre zu einem festen Zeitpunkt,
Fig. 4: Beispielhafte Flugbahn von Ionen in der Driftröhre,
Fig. 5: Beispielhaftes Spektrum ohne Wechselspannung,
Fig. 6: Beispielhaftes Spektrum mit Wechselspannung,
Fig. 7: Schematische Darstellung zweier Driftröhren und
Fig. 8: Schematische Darstellung der Driftröhre mit Hilfselektrode.

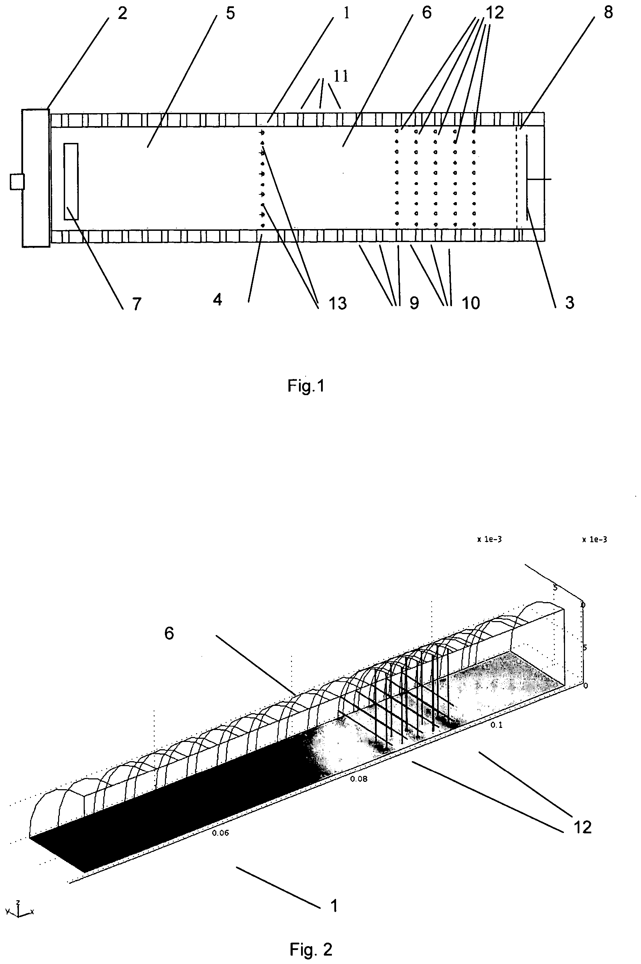

Die neue Vorrichtung zur Identifizierung von Gasen besteht in einem Ausführungsbeispiel, gem. **Fig. 1**, aus einer Driftröhre 1, die einerseits durch ein Einlasssystem 2 und andererseits durch einen aus einer flachen leitfähigen Scheibe bestehenden Detektor 3 begrenzt ist.

In der Driftröhre 1 befindet sich ein elektrisches Öffnungs- und Schließgitter 4, wodurch der Innerraum der Driftröhre 1 in einem Reaktionsraum 5 und einem Driftraum 6 unterteilt ist. Dabei wird der Reaktionsraum 5 durch das Einlasssystem 2 und der Driftraum 6 durch den Detektor 3 begrenzt. Außerdem sind im Reaktionsraum 5 nahe dem Einlasssystem 2 eine Ionenquelle 7 und im Driftraum 6 vor dem Detektor 3 ein Abschirmgitter 8 angeordnet, wobei die Ionenquelle 7 eine radioaktive Ni63 Folie aufweist und das Abschirmgitter 8 einer kapazitiven Entkopplung dient. Das Öffnungs- und Schließgitter 4 ist ein so genanntes Bradbury-Nielsen Gitter und besteht aus zwei, in einer Ebene und quer durch die Driftröhre 1 angeordneten, elektrisch leitfähigen Metallkämmen 13, wobei die Metallkämme 13 etwas versetzt zueinander sind und sich nicht berühren.

Die Driftröhre 1 besteht aus abwechselnd angeordneten Metallringen 9 und Isolatorringen 10, wobei die Metallringe 9 jeweils elektrisch über Widerstände verbunden sind und somit als Gleichspannungselektroden 11 ausgebildet sind. Die an den Gleichspannungselektroden 11 anliegenden Spannungen sind so ausgewählt, dass konstante Feldstärken sich im Reaktionsraum 5 bzw. Driftraum 6 ausbilden können. Weiterhin weist die Driftröhre 1 um den Driftraum 6 mehrere, aus dünnen Drahtgittern bestehende Wechselspannungselektroden 12 auf, die über die Länge des Driftraums 6 verteilt angeordnet sind und dabei quer durch den Driftraum 6 verlaufen.

In Funktion der neuen Vorrichtung zur Identifizierung von Gasen nach dem ersten Ausführungsbeispiel wird die zu untersuchende chemische Verbindung einschließlich der Umgebungsluft über das Einlasssystem 2 in die Ionenquelle 7 geführt. Das Einlasssystem 2 kann aus einer kleinen Öffnung oder für mobile Systeme aus einer Silikonmembran bestehen.

In der Ionenquelle 7 werden durch die radioaktive Strahlung der Ni63 Folie hauptsächlich aus der Umgebungsluft stammende Luftmoleküle ionisiert. Über weiterführende Reaktionen und Anlagerungen mit Wassermolekülen werden sogenannte Reaktant-Ionen gebildet. Diese Reaktant-Ionen werden anschließend, über Protonentransfer-, Elektronentransfer- oder Protonenabstraktions-Reaktionen, die Moleküle der untersuchten chemischen Verbindung ionisieren und Produkt-Ionen ausbilden. Diese Produkt-Ionen gelangen durch ein elektrisches Feld welches durch die Gleichspannungselektroden 11 aufgebaut wird, vom Reaktionsraum 5, zum Öffnungs- und Schließgitter 4. Das Öffnungs- und Schließgitter 4 weist zwei Schaltzustände auf. Im ersten Schaltzustand ist das Öffnungs- und Schließgitter 4 geschlossen. Dabei liegen die Metallkämme 13 des Öffnungs- und Schließgitter 4 auf unterschiedlichen Potentialen, wobei die Potentialdifferenz zwischen den Metallkämmen 13 ca. 100 V beträgt. Durch diese Potentialdifferenz bildet sich eine hohe Feldstärke, die keine Ionen hindurch lässt. Dadurch können keine Ionen von dem Reaktionsraum 5 in die Driftraum 6 gelangen. Im zweiten Schaltzustand ist das Öffnungs- und Schließgitter 4 geöffnet. Dazu wird die Potentialdifferenz zwischen den Metallkämmen 13 innerhalb von einigen Mikrosekunden abgebaut, so dass das Öffnungs- und Schließgitter 4 kurzzeitig Ionen hindurch lässt und somit Ionen aus dem Reaktionsraum 5 in den Driftraum 6 gelangen.

Dieses Öffnungs- und Schließgitter 4, das im Normalzustand geschlossen ist, wird in definierten Zeitintervallen kurz geöffnet, in dem die Potentialdifferenz zwischen den Metallkämmen 13 kurzzeitig abgebaut wird. Dabei werden im geöffneten Zustand des Öffnungs- und Schließgitters 4 die Ionen vom elektrischen Feld der Gleichspannungselektroden 11 vom Reaktionsraum 5 in die Driftraum 6 in Richtung Detektor 3 gezogen. Auf dem Weg zum Detektor 3 müssen die Ionen die elektrischen Felder der Gleichspannungselektroden 11 und der Wechselspannungselektroden 12 durchdringen, wobei durch diese elektrischen Felder auf allen Ionen gleicher Ladung eine gleiche Zugkraft wirkt. Da aber die Ionen ständig mit den neutralen Luftmolekülen zusammenstoßen, ist die Geschwindigkeit der Ionen in den elektrischen Feldern von der Ionenmasse, bzw. Ionengröße und der Ionenform abhängig.

Durch die Gleichspannungselektroden 11 entsteht ein elektrisches Feld mit einer geringen Feldstärke, durch das Ionen mit gleichen Durchmessern und Formen auch gleiche Driftgeschwindigkeiten und Ionen mit verschiedenen Durchmessern und Formen auf unterschiedliche Driftgeschwindigkeiten beschleunigt werden. Dabei wird aber in einem Bereich des Driftraumes 6 durch die Wechselspannungselektroden 12 das durch die Gleichspannungselektroden 11 erzeugte elektrische Feld mit geringer Feldstärke von einem in gleicher Koordinatenachse wirkendem asymmetrischem Wechselfeld hoher Feldstärke überlagert, so dass zwischen den Wechselspannungselektroden 12 eine zusätzlich Kraft auf die Ionen wirkt. Dadurch werden die Ionen zusätzlich abgebremst oder beschleunigt, so dass die Ionen zwischen den Wechselspannungselektroden 12 oszillierende Bewegungen aufweisen.

Deshalb führen die Ionen im Driftraum 6 eine konstante Grundbewegung aus, die durch die oszillierenden Bewegungen zwischen den Wechselspannungselektroden 12 überlagert ist, wobei durch die oszillierenden Bewegungen die Ionen mit unterschiedlichen $\alpha$(E)-Werten getrennt werden. Dabei beschreiben die $\alpha$(E)-Werte die nichtlineare Abhängigkeit der Beschleunigungsrichtung vom elektrischen Feld, die für verschiedene chemische Verbindungen unterschiedlich ist. So kann der $\alpha$(E)-Wert mit steigender Feldstärke stetig zunehmen, mit steigender Feldstärke abnehmen oder auch mit steigender Feldstärke zuerst zunehmen und bei höherer Feldstärke wieder abnehmen. Dementsprechend unterteilen sich chemische Verbindungen, je nach ihrer Abhängigkeit von der Feldstärke, in drei Kategorien, wobei bei den Ionen des Typs A die Beweglichkeit der Ionen mit Erhöhung der Feldstärke zunimmt, bei Ionen des Typs C die Beweglichkeit mit der Erhöhung der Feldstärke abnimmt und bei Ionen des Typs B die Beweglichkeit mit steigender Feldstärke zuerst zunimmt und bei höheren Feldstärken wieder abnimmt. Die Trennung der Ionen, z.B. Ionen vom Typ A und Typ C, erfolgt im Driftraum 6 also wegen der unterschiedlichen, aus konstanter Grundbewegung und oszillierenden Bewegung resultierenden Bewegungen der Ionen des Typs A und des Typs C, weil die Ionen im asymmetrischen Wechselfeld beim Typ A zusätzlich beschleunigt bzw. beim Typ C abgebremst werden.

Am Ende des Driftraumes 6 treffen die Ionen auf den Detektor 3 auf. Der Detektor 3 ist ein Faraday-Auffänger, wobei das vor dem Detektor 3 angeordnete Abschirmgitter 8 einer kapazitiven Entkopplung zwischen den sich kurz vor dem Detektor 3 befindenden Ionen und dem Detektor 3 dient.

Die Messsignale des Detektors 3 werden mit einer in **Fig. 1** nicht dargestellten Auswerteeinheit ausgewertet, wobei aus den Öffnungszeiten des Öffnungs- und Schließgitters 4 und dem Auftreffen der Ionen auf den Detektor 3 die Driftzeiten der ionisierten Moleküle durch einen Driftraum 6 ermittelt wird. Zur Auswertung dieser gemessenen Driftzeiten werden diese gemessenen Driftzeiten mit vorher ermittelten Driftzeiten bekannter chemischer Verbindungen verglichen, wobei bei gleichen Driftzeiten auch gleiche ionisierte Moleküle und damit auch gleiche chemische Verbindungen vorliegen.

In **Fig. 2** sind die Potentialverlauf zu einem festen Zeitpunkt für die Driftröhre 1, gemäß **Fig. 1,** dargestellt. Es ist zu erkennen, dass das elektrische Potential in Höhe der Wechselspannungselektrode 12 deutlich zunimmt, während es außerhalb der Wechselspannungselektrode 12 gleichmäßig abnimmt. Daraus wird ersichtlich, dass die Wechselspannungselektroden 12, im vorliegenden Beispiel, nicht beliebig in der Driftröhre 1 positioniert werden dürfen, da z.B. bei zu geringen Potentialen, wie sie am Anfang des Driftraumes 6 vorliegen, die elektrischen Feldstärken der Wechselfelder zu hoch sind und somit keine Ionen zum Detektor gelangen können.

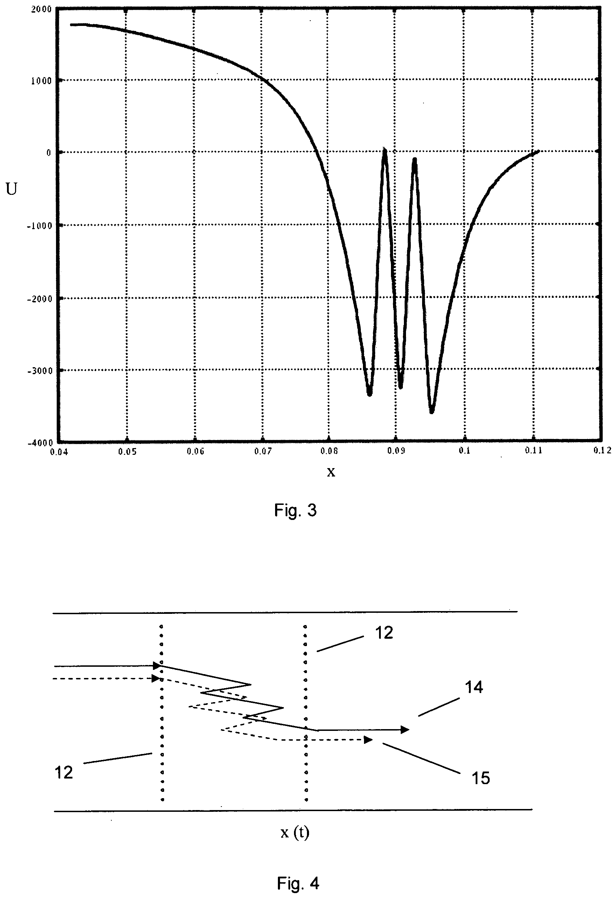

In **Fig. 3** ist der Potentialverlauf für die Driftröhre 1, gemäß **Fig.1**, beispielhaft dargestellt, wobei das Potential auf den zurückgelegten Weg x der Ionen im Driftraum 6 zu einem festen Zeitpunkt bezogen ist. Es ist zu erkennen, dass das Wechselfeld, bezogen auf die in **Fig.1** dargestellten Driftröhre 1 mit fünf Wechselspannungselektroden 12, auf der ersten, der dritten und der fünften Wechselspannungselektrode liegt, während die zweite und vierte Wechselspannungselektrode 12 auf einer Gleichspannung liegen. In **Fig. 4** werden Flugbahnen der Ionen im Driftraum 6 zwischen zwei benachbarten Wechselspannungselektroden 12 der Driftröhre 1 beispielhaft dargestellt, wobei der zurückgelegte Weg x der Ionen im Driftraum 6 auf die Zeit t bezogen ist. Die Flugbahn 14 zeigt Ionen mit einem hohen $\alpha$(E) Wert, die Flugbahn 15 Ionen mit einem geringen $\alpha$(E) Wert. Es werden zwei Flugbahnen von Ionen gleicher Beweglichkeit bei geringer Feldstärke, d.h. mit gleicher Beweglichkeit $K(E_{klein})$, aber mit unterschiedlicher Beweglichkeit bei hoher Feldstärke $K(E_{gross})$ dargestellt. Eine Ablenkung senkrecht zur den Feldlinien ist nicht vorhanden, wird aber zur Verdeutlichung des Sachverhaltes in der Skizze gezeichnet.

Es ist in **Fig. 4** zu erkennen, dass durch die Ablenkung der Ionen mittels der Wechselspannungselektrode 12, welche eigentlich nur in Flugrichtung der Ionen erfolgt, Ionen die im Bereich vor der Wechselspannungselektroden 12 nicht aufgetrennt werden, durch den Einfluss der hohen asymmetrischen Wechselspannungen im Bereich der Wechselspannungselektroden 12 unterschiedliche Weglängen durchfliegen, so dass eine Auftrennung möglich ist. Damit ist auch ersichtlich, dass die Ionen mit unterschiedlichem $\alpha(E)$ Wert bei einer hohen elektrischen Feldstärke unterschiedliche Mobilitäten aufweisen, obwohl sie bei geringer elektrischer Feldstärke gleiche Mobilitäten besitzen, so dass diese Ionen auch unterschiedliche Laufzeiten durch den Driftraum 6 bei zugeschalteter hoher asymmetrischer Wechselspannung aufweisen und somit zu unterschiedlichen Zeiten zum Detektor 3 gelangen.

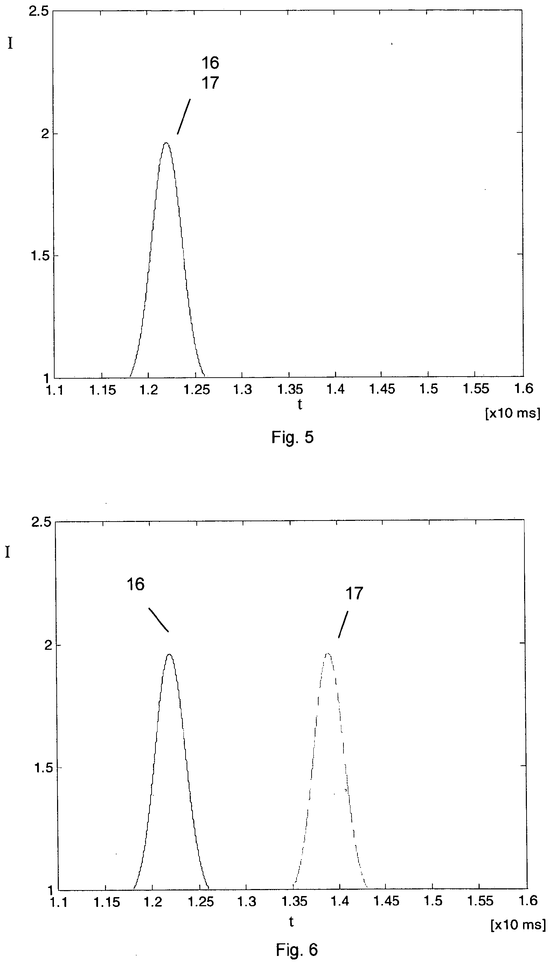

Aus den gemessenen Laufzeiten der Ionen durch den Driftraum 6 oder der Driftzeit im Maximum der Glockenkurve und der bekannten Länge der Driftstrecke lässt sich die Driftgeschwindigkeiten der Ionen bestimmen. Da die Laufzeit einige Millisekunden beträgt, werden jeweils über mehrere Messungen gemittelte Spektren im Sekundentakt in Form einer gaußförmigen Glockenkurve angezeigt. Beispielhaft sind in **Fig. 5** und **Fig. 6** die am Detektor 3 gemessenen Signale dargestellt. Dabei zeigen **Fig. 5** und **Fig. 6** unterschiedliche mit dem Detektor 3 aufgenommene Spektren, wobei in **Fig. 5** beispielhaft das Spektrum bei an den Wechselspannungselektroden 12 angelegten niedrigen Gleichspannungen, korrespondierend zum jeweiligen Gleichspannungspotential, und in **Fig. 6** beispielhaft das Spektrum bei einer an die Wechselspannungselektroden 12 angelegten asymmetrischen Wechselspannungen mit hoher Feldstärke dargestellt ist.

Die **Fig. 5** zeigt die Laufzeiten 16, 17 von Ionen mit gleicher Mobilität bei einem konstanten elektrischen Feld geringer Feldstärke im Driftraum 6 der Driftröhre 1. Diese Verteilungen der Laufzeiten liegen übereinander, so dass ionisierte Moleküle von chemischen Verbindungen, die eine gleiche Mobilität bei geringe Feldstärke $K(E_{klein})$ aufweisen, nicht voneinander zu trennen sind.

Die **Fig. 6** zeigt die Verteilungen 16, 17 von Ionen mit gleicher Mobilität bei geringer Feldstärke unter dem Einfluss eines wechselnden elektrischen Feldes in einem asymmetrischen Wechselfeld hoher Feldstärke im Driftraum 6 der Driftröhre 1. Diese Verteilungen der Laufzeiten 16, 17 liegen jetzt deutlich nebeneinander, so dass ionisierte Moleküle von chemischen Verbindungen, die eine gleiche Mobilität bei geringer Feldstärke aufweisen, voneinander getrennt sind.

Durch Änderung der Polarität der Elektroden 11 können mit der Driftröhre 1 in einem positiven Betriebsmodus positive und in einem negativen Betriebsmodus negative Ionen am Detektor 3 registriert werden.

Es ist aber denkbar, positive und negative Ionen durch Wechseln der Polaritäten der elektrischen Felder in kurzer Zeitfolge hintereinander zu messen. Dabei würden sich in bestimmten Zeitintervallen die an die Elektroden 11 angelegten Gleichspannungen in ihrer Polaritäten ändern, wodurch auch die Richtung der elektrischen Felder zwischen den Elektroden 11 umgekehrt wird.

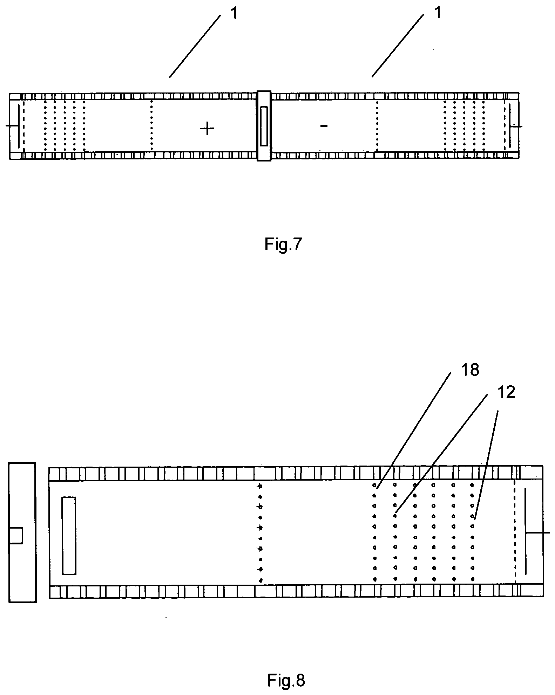

Denkbar wäre auch eine Kombination von zwei Driftröhren 1, gemäß der **Fig. 7**, wobei die Richtung der elektrischen Felder zwischen den Elektroden 11 der ersten Driftröhren 1 entgegengesetzt Richtung der elektrischen Felder zwischen den Elektroden 11 der zweiten Driftröhren 1 ist. Mit dieser Kombination von zwei Driftröhren 1 mit entgegensetzten Polaritäten können gleichzeitig positive und negative Ionen in jeweils einer Driftröhre 1 vermessen werden.

In einer besonderen Ausgestaltung der Ausführungsvariante kann auch die Amplitude der Wechselspanriung verändert werden. Dadurch ändern sich auch die Driftzeiten, wobei diese Änderungen der Driftzeiten als zusätzliches Merkmal zur Identifizierung der untersuchten chemischen Verbindung einsetzbar ist. Dabei können zur Auswertung der gemessenen Driftzeiten diese gemessenen Driftzeiten mit vorher ermittelten Driftzeiten bekannter chemischer Stoffe und Verbindungen, die mit und ohne Amplitudenänderung der Wechselspannung erhalten wurden, verglichen werden.

Alternativ ist es auch denkbar, anstelle der in **Fig. 1** mit fünf Wechselspannungselektroden 12 dargestellten Driftröhre 1 die Anzahl der Wechselspannungselektroden 12 zu verändern und/ oder die Anlegung der Wechselspannung zu verändern.

Auch ist es denkbar, die kreiszylindrische Driftröhre 1 in jeder anderen geeigneten Bauform, wie z.B. im Querschnitt rechteckig auszuführen.

Desweiteren ist es denkbar die Driftröhre nicht wie beschrieben aus alternierenden Metall- und Isolator- ringen aufzubauen, sondern stattdessen ein homogenes Material mit geringer elektrischer Leitfähigkeit zu verwenden. Leitfähige Gläser, Keramiken oder Kunststoffe kommen z.B. in Frage, aber auch elektrisch isolierende Strukturen, welche mit elektrisch leitenden Oberflächen beschichtet sind.

Auch ist es denkbar, gemäß der **Fig. 8**, im Driftraum 6 der Driftröhre 1 eine Hilfselektrode 18 anzuordnen, wodurch eine zusätzliche Kompensationsspannung erzeugt wird. Damit wird eine zusätzliche Änderung der Driftzeit der ionisierten Moleküle erreicht, welche als zusätzliches Merkmal zur Identifizierung des untersuchten chemischen Stoffes oder Verbindung nutzbar ist.

Es ist auch denkbar, die in der Ionenquelle 7 stattfinden Umwandlungsprozesse durch andere geeignete Prozesse zu ersetzen. So könnten die Ionen statt mittels radioaktiver Strahlung auch beispielsweise durch eine Photoionisierung oder eine Koronaentladungen erzeugt werden.

Da der Startpuls des Öffnungs- und Schließgitters 4 verglichen mit der Driftzeit der Ionen sehr gering ist und deshalb ein großer Teil der Ionen wegen der Neutralisation der ionisierten Moleküle am geschlossenen Gitter nicht verwendet wird, können alternativ bekannte Verfahren zur Optimierung der Ausbeute und somit der Nachweisgrenze, z.B. durch die Erhöhung des Ionendurchsatzes des Öffnungs- und Schließgitters 4 eingesetzt werden. Denkbar wäre hierbei eine Modulation des Ionenstrahls mit den Schaltzeiten des Öffnungs- und Schließgitters 4 mit Hilfe einer mathematischen Entfaltung, z.B. über Hadamard- oder Fourier-Transformationen, wodurch aus dem am Detektor 3 gemessene Signale das Laufzeitspektrum berechnet wird.

Auch ist es denkbar, die Selektivität der Driftröhre 1 durch die Verwendung eines zusätzliches Reaktionsgases, bzw. Dopandgas, zu optimieren. Mit diesem Reaktionsgas werden chemische Reaktionen, welche z.B. durch Protonenaffinitäten bei positiven Ionen oder Elektronegativitäten bei negativen Ionen gesteuert werden, beeinflusst, so dass die Selektivität des Verfahrens beeinflusst wird. Zusätzlich kann die Selektivität der Driftröhre 1 auch durch Anlagerungs- und Ablagerungsprozesse der Reaktionsgase bzw. anderer elektrisch neutraler Gase an den Ionen bei hohen Feldstärken beeinflusst werden.

Des Weiteren sind auch Kombinationen der Driftröhre 1 mit anderen Sensoren, bzw. Detektoren und/ oder mit weiteren Verfahren zur Steigerung der Selektivität wie z.B. durch einen davor angeordneten Gaschromatographen denkbar.

## Liste der Bezugszeichen

| 1 | Driftröhre |
|---|---|
| 2 | Einlasssystem |
| 3 | Detektor |
| 4 | Öffnungs- und Schließgitter |
| 5 | Reaktionsraum |
| 6 | Driftraum |
| 7 | Ionenquelle |
| 8 | Abschirmgitter |
| 9 | Metallring |
| 10 | Isolatorring |
| 11 | Elektrode |
| 12 | Wechselfeld-Elektrode |
| 13 | Metallkamm |
| 14 | Flugbahn |
| 15 | Flugbahn |
| 16 | Verteilung der Flugzeiten |
| 17 | Verteilung der Flugzeiten |
| 18 | Hilfselektrode |

## Patentansprüche

1. Verfahren zur Identifizierung von Gasen, bei dem die zu identifizierenden Gase ionisiert und die Driftzeiten der ionisierten Moleküle durch einen Driftraum (6) gemessen und die gemessenen Driftzeiten ausgewertet werden, wobei zur Messung der Driftzeiten die ionisierten Moleküle durch ein resultierendes elektrisches Feld auf Driftgeschwindigkeiten beschleunigt werden, wobei jedes ionisierte Molekül durch das resultierende elektrische Feld eine Driftgeschwindigkeit aufweist, die teilweise vergrößert oder verkleinert wird, wobei das resultierende elektrische Feld ein Gleichspannungsfeld ist, welches lokal von einem asymmetrischen Wechselfeld überlagert wird, so dass die ionisierten Moleküle eine Driftbewegung in einer Richtung ausführen und die oszillierende Bewegung sich parallel hierzu überlagert,
   **dadurch gekennzeichnet, dass** das asymmetrische Wechselfeld von mindestens drei Wechselspannungselektroden (12) erzeugt wird, die lokal über die Länge des Driftraumes (6) verteilt angeordnet sind.

2. Verfahren nach Anspruch 1,
   **dadurch gekennzeichnet, dass** die Änderung der Driftgeschwindigkeit daraus resultiert, dass jedes ionisierte Molekül durch das resultierende elektrische Feld eine konstante, mit einer oszillierenden Bewegung überlagerte Driftbewegung ausführt.

3. Verfahren nach Anspruch 1 oder 2,
   **dadurch gekennzeichnet, dass** als ionisierte Moleküle positive und/oder negative Ionen verwendet werden.

4. Verfahren nach einem der Ansprüche 1 bis 3,
   **dadurch gekennzeichnet, dass** jedes ionisierte Molekül mehrmals beschleunigt und abgebremst wird, wobei im Mittel, je nach den stofflichen Eigenschaften des Moleküls, die Beschleunigung größer oder kleiner als die Abbremsung ist.

5. Verfahren nach Anspruch 1,
**dadurch gekennzeichnet, dass** das Gleichspannungsfeld eine geringe elektrische Feldstärke und das asymmetrische Wechselspannungsfeld eine hohe elektrische Feldstärke aufweist.

6. Verfahren nach Anspruch 5,
**dadurch gekennzeichnet, dass** während der Messung der Driftzeiten die Amplitude der asymmetrischen Wechselspannung verändert wird.

7. Verfahren nach einem der vorhergehenden Ansprüche,
**dadurch gekennzeichnet, dass** zur Identifizierung der chemischen Verbindungen diese gemessenen Driftzeiten mit vorher ermittelten Driftzeiten bekannter chemischer Verbindungen verglichen werden.

8. Verfahren nach Anspruch 7,
**dadurch gekennzeichnet, dass** der Vergleich zwischen gemessenen Driftzeiten und den bekannter Driftzeiten von chemischen Verbindungen mittels mathematischer oder statistischer Methoden, insbesondere mittels regelbasierenden Algorithmen oder Künstlich-neuronalen Netzen erfolgt.

9. Verfahren nach einem der vorhergehenden Ansprüche,
**dadurch gekennzeichnet, dass** die Driftzeiten ionisierter Moleküle mit gleichen Mobilitäten bei geringen elektrischen Feldstärken mit den Driftzeiten dieser ionisierten Moleküle nach Zuschaltung der durch die Wechselspannungselektroden (12) erzeugten asymmetrischen Wechselspannungsfeld mit einer hohen elektrischen Feldstärke verglichen werden und dass zur Identifizierung der chemischen Verbindungen diese gemessenen Driftzeiten mit den vorher ermittelten Driftzeiten verglichen werden.

10. Vorrichtung zur Identifizierung von Gasen, bestehend aus einem Einlasssystem (2) und mindestens einem Detektor (3), wobei mindestens eine Driftröhre (1) einerseits durch das Einlasssystem (2) und andererseits durch jeweils einen Detektor (3) begrenzt ist und sich in jeder Driftröhre (1) ein die Driftröhre (1) in einem Reaktionsraum (5) und einem Driftraum (6) unterteilendes Öffnungs- und Schließgitter (4) befindet, wobei im Reaktionsraum (5) eine Ionenquelle (7) und im Driftraum (6) ein Abschirmgitter (8) angeordnet sind sowie die Driftröhre (1) mehrere um den Driftraum (6) angeordnete Gleichspannungselektroden (11) aufweist und weiterhin Wechselspannungselektroden lokal über die Länge des Driftraumes derart verteilt angeordnet sind, dass sich zumindest ein Bereich ergibt, indem das von den Gleichspannungselektroden (11) erzeugte elektrische Feld von einem asymmetrischen Wechselfeld überlagert ist,
**dadurch gekennzeichnet, dass** die Wechselspannungselektroden im Driftraum (6) mindestens drei Wechselspannungselektroden (12) umfassen.

11. Vorrichtung nach Anspruch 10,
**dadurch gekennzeichnet, dass** eine weitere Driftröhre (1) einerseits durch das Einlasssystem (2) und andererseits durch einen weiteren Detektor (3) begrenzt ist, wobei Polaritäten der Driftröhren (1) entgegengesetzt sind.

12. Vorrichtung nach Anspruch 10 oder 11,
**dadurch gekennzeichnet, dass** die Driftröhre (1) aus abwechselnd angeordneten Metallringen (9) und Isolatorringen (10) besteht, wobei jeder Metallring (9) um den Driftraum (6) elektrisch verbunden ist und jeweils eine Gleichspannungselektrode (11) ausbildet.

13. Vorrichtung nach Anspruch 10 oder 11,
**dadurch gekennzeichnet, dass** die Driftröhre (1) aus einem oder mehreren Rohren mit geringer elektrischer Leitfähigkeit besteht.

14. Vorrichtung nach einem der Ansprüche 10 bis 13,
**dadurch gekennzeichnet, dass** die Wechselspannungselektroden (12) aus quer durch den Driftraum (6) verlaufenden dünnen Drahtgittern bestehen.

15. Vorrichtung nach einem der Ansprüche 10 bis 14,
**dadurch gekennzeichnet, dass** das Öffnungs- und Schließgitter (4) aus zwei, in einer Ebene und quer durch die Driftröhre (1) angeordneten, elektrisch leitfähigen Metallkämmen (13) besteht, wobei die Metallkämme (13) etwas versetzt zueinander sind und sich nicht berühren.

16. Vorrichtung nach Anspruch 15,
**dadurch gekennzeichnet, dass** das Öffnungs- und Schließgitter (4) zwei Schaltzustände aufweist, wobei:

- in einem ersten Schaltzustand das Öffnungs- und Schließgitter (4) geschlossen ist, weil die Metallkämme (13) auf unterschiedliche Potentiale liegen und durch diese Potentialdifferenz sich eine hohe Feldstärke ausbildet, wodurch keine Ionen durch das Öffnungs- und Schließgitter (4) hindurch gelangen und
- in einem zweiten Schaltzustand das Öffnungs- und Schließgitter (4) geöffnet ist, weil die Metallkämme (13) auf einem gleichen Potential liegen und durch kein elektrisches Feld oder ein elektrisches Feld mit einer geringen Feldstärke ausbildet, wodurch die Ionen durch das Öffnungs- und Schließgitter (4) hindurch gelangen.

17. Vorrichtung nach einem der Ansprüche 10 bis 16,
**dadurch gekennzeichnet, dass** das Abschirmgitter (8) vor dem Detektor (3) angeordnet ist, wobei das Abschirmgitter (8) einer kapazitiven Entkopplung dient.

18. Vorrichtung nach einem der Ansprüche 10 bis 17,
**dadurch gekennzeichnet, dass** die Driftröhre (1) mindestens eine im Driftraum (6) angeordnete Hilfselektrode (18) aufweist, womit eine zusätzliche Kompensationsspannung erzeugt wird.

19. Vorrichtung nach einem der Ansprüche 10 bis 18,
**dadurch gekennzeichnet, dass** die Driftröhre (1) vorzugsweise eine kreiszylindrische Bauform aufweist.


**Claims**

1. A method for identification of gases, in which the gases to be identified are ionised and the drift times of the ionised molecules through a drift space (6) are measured and the measured drift times are evaluated, wherein in order to measure the drift times the ionised molecules are accelerated by a resulting electric field to drift velocities, wherein each ionised molecule has a drift velocity due to the resulting electric field, which is partially increased or decreased, wherein the resulting electric field is a DC voltage field on which an asymmetric AC field is locally superimposed, so that the ionised molecules perform a drift movement in one direction and the oscillatory movement is superimposed parallel thereto,
**characterised in that** the asymmetric AC field is generated by at least three AC voltage electrodes (12) which are arranged locally distributed along the length of the drift space (6).

2. The method according to Claim 1,
**characterised in that** the change in the drift velocity results from the fact that, due to the resulting electric field, each ionised molecule performs a constant drift movement on which an oscillatory movement is superimposed.

3. The method according to Claim 1 or 2,
**characterised in that** positive and/or negative ions are used as ionised molecules.

4. The method according to any one of Claims 1 to 3,
**characterised in that** each ionised molecule is accelerated and decelerated several times, wherein on average, depending on the material properties of the molecule, the acceleration is greater or smaller than the deceleration.

5. The method according to Claim 1,
**characterised in that** the DC voltage field has a low electric field strength, and the asymmetric AC voltage field has a high electric field strength.

6. The method according to Claim 5,
**characterised in that** the amplitude of the asymmetric AC voltage is changed during the measurement of the drift times.

7. The method according to any one of the preceding claims,
**characterised in that** in order to identify the chemical compounds these measured drift times are compared with previously determined drift times of known chemical compounds.

8. The method according to Claim 7,
**characterised in that** measured drift times and the known drift times of chemical compounds are compared using mathematical or statistical methods, in particular rule-based algorithms or artificial neural networks.

9. The method according to any one of the preceding claims,
**characterised in that** the drift times of ionised molecules having identical mobilities at low electric field strengths are compared with the drift times of these ionised molecules after the asymmetric AC voltage field with a high electric field strength generated by the AC voltage electrodes (12) is switched on, and that these measured drift times are compared with the previously determined drift times in order to identify the chemical compounds.

10. A device for identification of gases, consisting of an inlet system (2) and at least one detector (3), wherein at least one drift tube (1) is delimited, on the one hand, by the inlet system (2) and, on the other hand, by a respective detector (3), and that an opening and closing grid (4) which divides the drift tube (1) into a reaction space (5) and a drift space (6) is located in each drift tube (1), wherein an ion source (7) is arranged in the reaction space (5) and a shield grid (8) is arranged in the drift space (6), and the drift tube (1) has several DC voltage electrodes (11) arranged around the drift space (6) and, in addition, AC voltage electrodes (12) are distributed locally along the length of the drift space in such a manner that at least one area is produced in that an asymmetric AC field is superimposed on the electric field generated by the DC voltage electrodes (11),
**characterised in that** the AC voltage electrodes in the drift space (6) has at least three AC voltage electrodes (12).

11. The device according to Claim 10,
**characterised in that** an additional drift tube (1) is delimited, on the one hand, by the inlet system (2) and, on the other hand, by an additional detector (3), wherein the drift tubes (1) have opposite polarities.

12. The device according to Claim 10 or 11,
**characterised in that** the drift tube (1) consists of alternatingly arranged metal rings (9) and isolator rings (10), wherein each metal ring (9) is electrically connected around the drift space (6) and forms a respective DC voltage electrode (11).

13. The device according to Claim 10 or 11,
**characterised in that** the drift tube (1) consists of one or more tubes having low electrical conductivity.

14. The method according to any one of Claims 10 to 13,
**characterised in that** the AC voltage electrodes (12) consist of thin wire grids extending transversely through the drift space (6).

15. The method according to any one of Claims 10 to 14,
**characterised in that** the opening and closing grid (4) comprises two electrically conducting metal combs (13) which are arranged in a plane extending transversely through the drift tube (1), wherein the metal combs (13) are slightly offset from one another and do not contact each other.

16. The device according to Claim 15,
**characterised in that** the opening and closing grid (4) has two switching states, wherein

- in a first switching state, the opening and closing grid (4) is closed, because the metal combs (13) are at different potentials and this potential difference produces a high field strength, thereby preventing ions from passing through the opening and closing grid (4), and
- in a second switching state, the opening and closing grid (4) is open, because the metal combs (13) are at the same potential, so that no electric field at all or only an electric field with a low field strength is produced, allowing ions to pass through the opening and closing grid (4).

17. The method according to any one of Claims 10 to 16,
**characterised in that** the shield grid (8) is arranged in front of the detector (3), wherein the shield grid (8) is used for capacitive decoupling.

18. The method according to any one of Claims 10 to 17,
**characterised in that** the drift tube (1) has at least one auxiliary electrode (18) which is arranged in the drift space (6), with which an additional compensation voltage is generated.

**19.** The method according to any one of Claims 10 to 18,
**characterised in that** the drift tube (1) is preferably constructed as a circular cylinder.

**Revendications**

**1.** Procédé pour l'identification de gaz, sur lequel des gaz devant être identifiés sont ionisés et les temps de dérive des molécules ionisées à travers une chambre de dérive (6) sont mesurés et les temps de dérive sont analysés, les molécules ionisées étant accélérées jusqu'à des vitesses de dérive par un champ électrique résultant pour la mesure des temps de dérive, chaque molécule ionisée présentant une vitesse de dérive à travers le champ électrique résultant qui est partiellement augmentée ou diminuée, le champ électrique résultant étant un champ de tension continue, auquel un champ alternatif asymétrique est superposé localement, de telle sorte que les molécules ionisées effectuent un mouvement de dérive dans une direction et le mouvement oscillant s'y superpose de façon parallèle, **caractérisé en ce que** le champ alternatif asymétrique est produit par au moins trois électrodes à tension alternative (12), lesquelles sont distribuées localement sur la longueur de la chambre de dérive (6).

**2.** Procédé selon la revendication 1,
**caractérisé en ce que** la variation de la vitesse de dérive résulte du fait que, par le champ électrique résultant, chaque molécule ionisée exécute un mouvement de dérive constant, auquel se superpose un mouvement oscillant.

**3.** Procédé selon la revendication 1 ou 2,
**caractérisé en ce que** des ions positifs et/ou négatifs sont utilisés comme molécules ionisées.

**4.** Procédé selon l'une des revendications 1 à 3,
**caractérisé en ce que** chaque molécule ionisée est accélérée et freinée à plusieurs reprises, l'accélération étant, en moyenne, supérieure ou inférieure au freinage en fonction des propriétés matérielles de la molécule.

**5.** Procédé selon la revendication 1,
**caractérisé en ce que** le champ de tension continue présente une intensité de champ électrique faible et le champ de tension alternative asymétrique présente une intensité de champ électrique élevée.

**6.** Procédé selon la revendication 5,
**caractérisé en ce que** l'amplitude de la tension alternative asymétrique est variée pendant la mesure des temps de dérive.

**7.** Procédé selon l'une des revendications précédentes,
**caractérisé en ce que** ces temps de dérive mesurés sont comparés avec des temps de dérive de composés chimiques connus déterminés antérieurement, en vue de l'identification des composés chimiques.

**8.** Procédé selon la revendication 7,
**caractérisé en ce que** la comparaison entre des temps de dérive mesurés et les temps de dérive connus de composés chimiques est effectuée au moyen de méthodes mathématiques ou statistiques, en particulier au moyen d'algorithmes à base de règles ou de réseaux de neurones artificiels.

**9.** Procédé selon l'une des revendications précédentes,
**caractérisé en ce que** les temps de dérive des molécules ionisées avec des mobilités identiques pour des intensités de champ électrique faibles sont comparés avec les temps de dérive de ces molécules ionisées après commutation du champ de tension alternative asymétrique avec une intensité de champ électrique élevée généré par les électrodes de tension alternative (12), et **en ce que** ces temps de dérive mesurés sont comparés avec les temps de dérive déterminés antérieurement, en vue de l'identification des composés chimiques.

**10.** Procédé pour l'identification de gaz se composant d'un système d'admission (2) et d'au moins un détecteur (3), au moins un tube de dérive (1) étant limité d'une part par le système d'admission (2) et d'autre part respectivement par un détecteur (3), et une grille d'ouverture et de fermeture (4) subdivisant le tube de dérive (1) en une chambre de réaction (5) et en une chambre de dérive (6) se trouvant dans chaque tube de dérive (1), une source d'ions (7) étant disposée dans la chambre de réaction (5) et une grille de blindage (8) étant disposée dans la chambre de dérive (6), ainsi que le tube de dérive (1) présentant plusieurs électrodes à tension continue (11) disposées autour de la chambre de dérive (6), et en outre, des électrodes à tension alternative étant distribuées localement sur la longueur de la chambre de dérive de telle sorte qu'au moins une zone où un champ alternatif asymétrique se superposant au champ électrique généré par les électrodes à tension continue (11) en résulte, **caractérisé en ce que** les électrodes à tension alternative dans la chambre de dérive (6) comprennent au moins trois électrodes à tension alternative (12).

**11.** Dispositif selon la revendication 10,
**caractérisé en ce qu'**un tube de dérive (1) supplémentaire est limité d'une part par le système d'admission (2) et d'autre part par un détecteur (3) supplémentaire, les polarités des tubes de dérive (1) étant opposées.

**12.** Dispositif selon la revendication 10 ou 11,
**caractérisé en ce que** le tube de dérive (1) se compose d'anneaux métalliques (9) et d'anneaux isolants (10) disposés en alternance, chaque anneau métallique (9) étant relié électriquement autour de la chambre de dérive (6) et formant respectivement une électrode à tension continue (11).

**13.** Dispositif selon la revendication 10 ou 11,
**caractérisé en ce que** le tube de dérive (1) se compose d'un ou plusieurs tubes avec conductivité électrique faible.

**14.** Dispositif selon l'une des revendications 10 à 13,
**caractérisé en ce que** les électrodes à tension alternative (12) se composent de grillages fins s'étendant transversalement dans la chambre de dérive (6).

**15.** Dispositif selon l'une des revendications 10 à 14,
**caractérisé en ce que** la grille d'ouverture et de fermeture (4) se compose de deux peignes métalliques (13) électriquement conducteurs, disposés sur un plan et transversalement dans le tube de dérive (1), les peignes métalliques (13) étant légèrement décalés l'un par rapport à l'autre et ne se touchant pas.

**16.** Dispositif selon la revendication 15,
**caractérisé en ce que** la grille d'ouverture et de fermeture (4) présente deux états de commutation,

    - la grille d'ouverture et de fermeture (4) étant fermée en un premier état de commutation parce que les peignes métalliques (13) se trouvent sur des potentiels différents et une intensité de champ élevée se forme du fait de cette différence de potentiel, ce par quoi aucun ion ne traverse la grille d'ouverture et de fermeture (4), et
    - la grille d'ouverture et de fermeture (4) étant ouverte en un deuxième état de commutation, parce que les peignes métalliques (13) ont un potentiel identique et aucun champ électrique ne se forme, ou un champ électrique avec intensité de champ faible se forme, ce par quoi les ions traversent la grille d'ouverture et de fermeture (4).

**17.** Dispositif selon l'une des revendications 10 à 16,
**caractérisé en ce que** la grille de blindage (8) est disposée devant le détecteur (3), la grille de blindage (8) servant à un découplage capacitif.

**18.** Dispositif selon l'une des revendications 10 à 17,
**caractérisé en ce que** le tube de dérive (1) présente au moins une électrode auxiliaire (18) disposée dans la chambre de dérive (6), une tension de compensation supplémentaire étant générée.

**19.** Dispositif selon l'une des revendications 10 à 18,
**caractérisé en ce que** le tube de dérive (1) présente de préférence une forme de construction en cylindre circulaire.

Fig.1

Fig. 2

Fig. 3

Fig. 4

Fig. 5

Fig. 6

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3621240 A
- DE 19515270 C2
- US 5420424 A
- US 6495823 B
- US 6504149 B
- WO 2005106450 A
- WO 2005067582 A

**In der Beschreibung aufgeführte Nicht-Patentliteratur**

- **G.A. EICEMAN ; Z. KARPAS.** Ion Mobility Spectrometry. CRC, 2005
- **NACH E.A. MASON ; E.W. MCDANIEL.** Transport Properties of Ions in Gases. Wiley, 1988